# EUROPÄISCHE PATENTANMELDUNG

(11) **EP 2 781 832 A1**
(43) Veröffentlichungstag der Anmeldung: **24.09.2014**
(21) Anmeldenummer: 13159672.8
(22) Anmeldetag: 18.03.2013
(51) Int. Cl.: F22B 1/00

(54) **Verfahren zum Anfahren eines solarthermischen Kraftwerks**

(71) Anmelder: Siemens Aktiengesellschaft, 80333 München (DE)
(72) Erfinder: Brückner, Jan, 91080 Uttenreuth (DE); Thomas, Frank, 91056 Erlangen (DE)

(57) **Zusammenfassung**

Die Erfindung betrifft ein Verfahren zum Anfahren eines solarthermischen Kraftwerks mit einem Dampferzeuger (B) und einem Zwischenüberhitzer (Z), denen ein solarthermisch erhitztes Wärmeträgermedium (M) zugeführt wird, wobei die Bespeisung des Zwischenüberhitzers (Z) mit Wärmeträgermedium (M) dann beginnt, wenn die Temperatur des Wärmeträgermediums (M) die mittlere Materialtemperatur des Zwischenüberhitzers (Z) überschreitet.

## Beschreibung

Die Erfindung betrifft ein Verfahren zum Anfahren eines solarthermischen Kraftwerks gemäß dem Oberbegriff des Anspruchs 1, sowie ein entsprechend ausgebildetes solarthermisches Kraftwerk.

Solarthermische Kraftwerke stellen eine Alternative zur herkömmlichen Stromerzeugung dar. Ein bereits bekanntes Kraftwerkskonzept in diesem Bereich ist das sogenannte Parabolrinnenkraftwerk, wie zum Beispiel in der DE 10 2009 038 446A1 offenbart. In diesem Kraftwerkstyp wird üblicherweise Thermoöl als Wärmeträgermedium verwendet, welches die Parabolrinnen durchströmt und so die über die Sonne eingebrachte Wärme aufnimmt. Die vom Thermoöl aufgenommene Wärme wird dann einem Dampferzeuger zugeführt. Dort werden die mit einem Strömungsmedium (Wasser-Dampf) gefüllten Dampferzeugerrohre von dem erhitzten Thermoöl umströmt, welches seine Wärme an die kälteren Dampferzeugerrohre abgibt. Der in den Rohren erzeugte Dampf treibt dann eine Dampfturbine an.

Zur Erzielung eines möglichst hohen Anlagenwirkungsgrades kann parallel zum Dampferzeuger ein Zwischenüberhitzer vorgesehen werden. Dazu wird der abgekühlte Abdampf der Hochdruck-Turbinenstufe dem Zwischenüberhitzer zugeführt und abermals auf ein höheres Temperaturniveau gebracht. Im Gegensatz zum eingangs beschriebenen Dampferzeuger werden hier typischerweise die mit Thermoöl gefüllten Zwischenüberhitzerrohre so vom Abdampf umströmt, so dass dieser wieder aufheizt wird. Aufgrund der verhältnismäßig großen Volumenströme des Zwischenüberhitzerdampfes halten sich bei einem derartigen Design die dampfseitigen Druckverluste in akzeptablen Grenzen.

Für den vom Dampferzeuger physisch getrennten Zwischenüberhitzer kann die zugeführte Menge an Wärmeträgermedium als freier Parameter angesehen werden. Konkret bedeutet dies, dass dem Zwischenüberhitzer gerade so viel Thermoöl zugeführt werden muss, dass bei vorgegebenem Dampfmassenstrom, kommend von der Hochdruck-Turbinenstufe, die gewünschte Endtemperatur des Zwischenüberhitzerdampfes erreicht wird.

Bestehende solarthermische Kraftwerksanlagen weisen heute vielfach Schäden an diesen separat beheizten Zwischenüberhitzern auf, die sich im Wesentlichen auf unzulässig hohe thermische Belastungen, insbesondere während des Anfahrens, zurückführen lassen. Üblicherweise wird heute der Zwischenüberhitzer unabhängig von der Temperatur des Thermoöls bespeist, so dass gerade während des Anfahrens die mittlere Materialtemperatur des Zwischenüberhitzers deutlich von der Temperatur des einströmenden Thermoöls abweichen kann. Dies kann zu unzulässig hohen Temperaturdifferenzen zwischen Wärmeträgermedium und den Materialien des Zwischenüberhitzers führen, und damit in unzulässig hohen Bauteilbeanspruchungen münden. Im ungünstigsten Fall können die auftretenden Beanspruchungen zu einem Versagen des Zwischenüberhitzers führen, was die Verfügbarkeit des solarthermischen Kraftwerks deutlich einschränkt.

Aufgabe der Erfindung ist es, ein Verfahren für das Anfahren eines solarthermischen Kraftwerks bereitzustellen, bei dem zum Einen alle betrieblichen Anforderungen während des Anfahrens erfüllt werden und gleichzeitig aus materialtechnischer Sicht ein möglichst schonendes Anfahren ermöglicht wird.

Diese Aufgabe wird mit dem Verfahren mit den Merkmalen des Anspruchs 1, sowie dem entsprechend ausgebildeten solarthermischen Kraftwerk mit den Merkmalen des Anspruchs 4, gelöst.

Durch den Einsatz des erfindungsgemäßen Verfahrens ist eine schonende Erhöhung der Materialtemperatur des Zwischenüberhitzers möglich. Dies wird dadurch gewährleistet, dass unabhängig von der Art des Anfahrvorgangs (sei es ein Kalt-, Warm- oder Heißstart), die Bespeisung des Zwischenüberhitzers mit dem Wärmeträgermedium immer dann beginnt, wenn die Temperatur des Wärmeträgermediums die mittlere Materialtemperatur des Zwischenüberhitzers, die sich durch einen Abkühlvorgang beispielsweise während eines Stillstands eingestellt hat, überschreitet. Dadurch, dass die Bespeisung des Zwischenüberhitzers mit Wärmeträgermedium nicht mehr an die Dampfströmung gekoppelt ist, sind bei dem späteren Beheizungsbeginn des Dampfes keine unzulässig hohen Temperaturdifferenzen zwischen Wärmeträgermedium und den einzelnen Bauteilen des Zwischenüberhitzers zu erwarten.

Das erfindungsgemäße Verfahren kommt vorzugsweise in solarthermischen Kraftwerken mit Parabolrinnen und Thermoöl als Wärmeträgermedium zur Anwendung, da insbesondere bei diesem Anlagentyp die Wärmeübertrager-Apparate, das heißt Dampferzeuger und Zwischenüberhitzer in der Regel physisch voneinander getrennt sind. Es kann aber ebenfalls in Anlagen mit anderen Wärmeträgermedien zur Anwendung kommen, vorausgesetzt die Anlage verfügt über einen eigenen, nicht in den Dampferzeuger integrierten Zwischenüberhitzer. Somit ist das Verfahren nicht ausschließlich auf Anwendungen mit Thermoöl als Wärmeträgermedium beschränkt.

Vorteilhaft ist eine Anlagenkonfiguration mit Hochdruck-Umleitstation, bei der bereits vor dem Dampfturbinenbetrieb der Zwischenüberhitzer mit Dampf bespeist werden kann. Dies führt dazu, dass auch bei schnell steigender Temperatur des Wärmeträgermediums aus dem Solarfeld der Zwischenüberhitzer nicht unnötigerweise vor dem eigentlichem Dampfturbinenbetrieb auf hohe Materialtemperaturen aufgeheizt wird, die dann bei einsetzender Bespeisung mit kaltem Zwischenüberhitzerdampf wieder schockartig abgesenkt werden und ebenfalls in einem zusätzlichen Lebensdauerverbrauch münden.

Bevorzugte Weiterbildungen sind den Unteransprüchen zu entnehmen.

Die Erfindung soll nun anhand einer Figur beispielhaft erläutert werden. Dargestellt sind hier Teile des solarthermischen Kraftwerks, nämlich ein Solarfeld S, ein Dampferzeuger B, ein Zwischenüberhitzer Z, eine Hochdruckstufe HD und eine Mitteldruckstufe MD einer Dampfturbine, sowie eine Hochdruckumleitung HDU. Das Wärmeträgermedium M, hier Thermoöl, wird in Parabolrinnen des Solarfeldes S erhitzt und anschließend sowohl dem Dampferzeuger B als auch dem Zwischenüberhitzer Z zugeführt. Das in den Dampferzeuger B eingespeiste Speisewasser W wird mit Hilfe des erhitzten Thermoöls erwärmt und in Frischdampf D überführt, welcher dann der Hochdruckstufe HD der Dampfturbine zugeführt wird. Parallel dazu wird im Zwischenüberhitzer Z, kalter Zwischenüberhitzerdampf KZU aus der Hochdruckstufe HD nochmals erhitzt und als heißer Zwischenüberhitzerdampf HZU der Mitteldruckstufe MD der Dampfturbine wieder zugeführt. Zudem ist im vorliegend gezeigten Ausführungsbeispiel eine Hochdruckumleitung HDU vorgesehen.

Aus Sicht des extern beheizten Zwischenüberhitzers Z findet ein möglichst schonendes Anfahren gerade dann statt, wenn dieser bereits relativ früh wärmeträgermediumsseitig mit frischem Thermoöl aus dem Solarfeld S bespeist wird, indem beispielsweise ein regelbares Ventil RZ in der Zuleitung zum Zwischenüberhitzer Z entsprechend geöffnet wird. Konkret bedeutet dies, dass sobald die Temperatur des im Solarfeld aufgeheizten Thermoöls die mittlere Materialtemperatur der einzelnen Bauteile im Zwischenüberhitzer Z überschreitet, die Bespeisung des Zwischenüberhitzers mit Thermoöl beginnt, und zwar auch dann, wenn strömungsmediumsseitig noch keine Dampfströmung (KZU und HZU) vorliegt. Da in diesem Fall eine auf der Dampfströmung basierte Regelung des Massenstroms des Wärmeträgermediums M noch nicht möglich ist, ist eine Mindestmenge an Thermoöl vorzugeben bzw. einzustellen (beispielsweise 10% vom Nennmassenstrom). Unter diesen Umständen heizen sich die einzelnen Bauteilgruppen des Zwischenüberhitzers Z entsprechend zum eintretenden Ölmassenstrom auf. Da die Temperaturänderung des Thermoöls aus Gründen der Bauteilsicherheit einzelner Komponenten des Solarkreislaufs (wie z.B. Pumpen) mit moderater Geschwindigkeit stattfindet, ist automatisch auch eine schonende Temperaturerhöhung der Zwischen-überhitzerbauteile gewährleistet. Findet dann zu gegebener Zeit strömungsmediumsseitig die Bespeisung mit kaltem Zwischenüberhitzerdampf KZU statt, was in der Regel dann der Fall ist, wenn der Dampferzeuger seinen ersten Frischdampf produziert hat, und ist eine zur Erreichung der Endtemperatur des Zwischenüberhitzerdampfes erforderliche Erhöhung des Ölmassenstroms sichergestellt, so ist dies ohne nennenswerte Temperaturdifferenzen zwischen dem Wärmeträgermedium M und den betroffenen Bauteilen des Zwischenüberhitzers Z möglich, da sich diese durch das oben beschriebene Prozedere bereits auf Thermoöltemperaturniveau befinden.

Neben der Regelfähigkeit der Zuführarmatur RZ zum Zwischenüberhitzer und gegebenenfalls vorhandenen weiteren Armaturen RU in einer Umleitung U zum zumindest teilweisen Vorbeiführen des Thermoöls am Zwischenüberhitzer und RB in einer Zuleitung zum Dampferzeuger Z, die alle als regelbare Ventile ausgebildet sein können, ist auch ein geeignetes Regelkonzept für diese Armaturen vorzusehen. Dies kann beispielsweise eine geeignete Massenstromregelung sein, die darauf achtet, wenn vom eingespeisten Wärmeträgermedium M die mittlere Materialtemperatur der Bauteile des Zwischenüberhitzers Z überschritten wird.

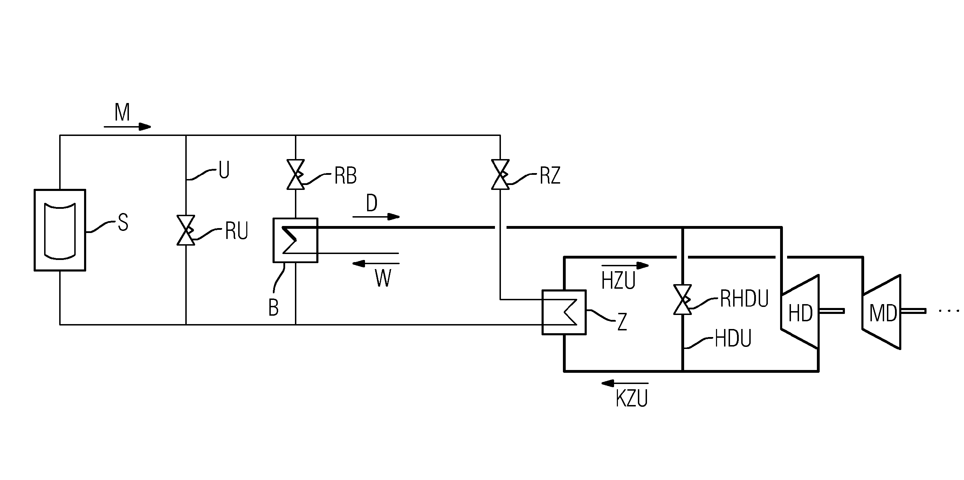

## Patentansprüche

1. Verfahren zum Anfahren eines solarthermischen Kraftwerks mit einem Dampferzeuger (B) und einem Zwischenüberhitzer (Z), denen ein solarthermisch erhitztes Wärmeträgermedium (M) zugeführt wird
**dadurch gekennzeichnet, dass** die Bespeisung des Zwischenüberhitzers (Z) mit Wärmeträgermedium (M) dann beginnt, wenn die Temperatur des Wärmeträgermediums (M) die mittlere Materialtemperatur des Zwischenüberhitzers (Z) überschreitet.

2. Verfahren nach Anspruch 1,
**dadurch gekennzeichnet, dass** ein in einer Zuleitung zum Zwischenüberhitzer (Z) angeordnetes regelbares Ventil (RZ) zumindest teilweise geöffnet wird, wenn die mittlere Materialtemperatur überschritten wird.

3. Verfahren nach Anspruch 1 oder 2,
**dadurch gekennzeichnet, dass** ein in einer Zuleitung zum Dampferzeuger (Z) und/oder ein in einer Umleitung (U) angeordnetes regelbares Ventil (RB,RU) zumindest teilweise geschlossen wird, wenn die mittlere Materialtemperatur überschritten wird.

4. Solarthermisches Kraftwerk mit einem Solarfeld (S) zum Erhitzen eines Wärmeträgermediums (M), einem Dampferzeuger (B), dem das erhitzte Wärmeträgermedium (M) zugeführt und so dem Dampferzeuger (B) zugeführtes Speisewasser (W) verdampft wird, und einer Dampfturbine (HD,MD) der dieser Dampf (D) zugeführt wird,
**dadurch gekennzeichnet, dass** eine Regeleinrichtung vorgesehen ist, die regelbare Ventile in einer Umleitung (U) und/oder einer Zuführung zum Dampferzeuger (B) und/oder einer Zuführung zu einem Zwischenüberhitzer (Z) so steuert, dass die Bespeisung des Zwischenüberhitzers (Z) mit Wärmeträgermedium (M) dann beginnt, wenn die Temperatur des Wärmeträgermediums (M) die mittlere Materialtemperatur des Zwischenüberhitzers (Z) überschreitet.

5. Solarthermisches Kraftwerk nach Anspruch 4
**dadurch gekennzeichnet, dass**
- das Solarfeld (S) Parabolrinnen aufweist, welche von Thermoöl als Wärmeträgermedium (M) durchströmt werden,
- der vom erhitzten Thermoöl durchströmte Dampferzeuger (B) ein Zwangdurchlaufverdampfer ist
- ein vom Thermoöl durchströmter Zwischenüberhitzer (Z) physisch getrennt vom Dampferzeuger (B) angeordnet ist, und
- für eine Hochdruckstufe (HD) der Dampfturbine eine Hochdruckumleitung (HDU) vorgesehen ist.
